# EUROPEAN PATENT APPLICATION

(11) **EP 4 057 216 A1**
(43) Date of publication of application: **14.09.2022**
(21) Application number: 21167840.4
(22) Date of filing: 12.04.2021
(51) Int. Cl.: G06T 5/40, G06T 5/50

(54) **METHOD AND SYSTEM FOR CORRECTING CONTRAST-ENHANCED IMAGES**

(30) Priority: 08.03.2021 US 202163158220 P
(71) Applicant: Koninklijke Philips N.V., 5656 AG Eindhoven (NL)
(72) Inventor: WILD, Sebastian, 5656 AE Eindhoven (NL); WEBER, Frank Michael, 5656 AE Eindhoven (NL); WAECHTER-STEHLE, Irina, 5656 AE Eindhoven (NL); PETERS, Jochen, 5656 AE Eindhoven (NL); EWALD, Arne, 5656 AE Eindhoven (NL); GOOßEN, André, 5656 AE Eindhoven (NL); LENGA, Matthias, 5656 AE Eindhoven (NL); WISSEL, Tobias, 5656 AE Eindhoven (NL); PRATER, David, 5656 AE Eindhoven (NL)
(74) Representative: Philips Intellectual Property & Standards

(57) **Abstract**

A method and system for correcting a difference in contrast agent density in a sequence of contrast-enhanced image frames. A reference image frame is defined in the sequence of contrast-enhanced image frames, and segmentation is performed on the reference image frame to determine a location of a region of interest within the reference image frame. The region of interest is a region of the reference image frame that contains contrast agent. Other image frames in the sequence of contrast-enhanced images are corrected based on a difference in contrast agent density/image intensity in the region of interest relative to the region of interest in the reference image frame.

## Description

### FIELD OF THE INVENTION

The invention relates to the field of correcting contrast-enhanced images, and in particular to the field of correcting a difference in contrast agent density in a sequence of contrast-enhanced image frames.

### BACKGROUND OF THE INVENTION

In medical imaging-based diagnostic applications, clinicians frequently compare images acquired at difference time frames. In the case of contrast-enhanced imaging, the degradation and dilution of the contrast agent means that images of the same anatomical feature corresponding to different time frames within an acquisition will generally show different levels of opacification. This makes it difficult for clinicians to compare the images.

Further, the time variability of the contrast agent density in a sequence of contrast-enhanced image frames can cause errors when a segmentation algorithm such as for example model-based segmentation is applied to the sequence. For example, the time-varying distribution of the contrast agent can lead to the detection of boundaries between regions of different agent density that do not correspond to physiological structures. This means that automated determinations of clinical information cannot be reliably obtained from sequences of contrast-enhanced image frames.

These are particular problems in contrast-enhanced imaging applications in which the time variability of the contrast agent is further complicated by physiological processes, such as the cardiac cycle. For example, the time variability of the contrast agent in left ventricular opacification (LVO) is caused by both the partial destruction of the contrast agent over time due to interactions with transmitted ultrasound waves and changes in contrast agent density over the cardiac cycle, as new blood containing undestroyed contrast agent flows into the left atrium and then into the left ventricle.

There is therefore a need for a method to reduce the effect of the degradation and/or dilution of the contrast agent in sequences of contrast-enhanced image frames.

### SUMMARY OF THE INVENTION

The invention is defined by the claims.

According to examples in accordance with an aspect of the invention, there is provided a computer-implemented method for correcting a difference in contrast agent density in a sequence of contrast-enhanced image frames.

The computer-implemented method comprises: selecting a reference image frame from the sequence of contrast-enhanced image frames; performing segmentation on the reference image frame; identifying a region of interest in the reference image frame based on the segmentation, wherein the region of interest is a region of the reference image frame that contains the contrast agent; and correcting the difference in contrast agent density in one or more image frames in the sequence of image frames based on a change in image intensity within the region of interest between each of the one or more contrast-enhanced image frames and the reference image frame.

This method allows the difference in contrast agent density between image frames in a sequence of contrast-enhanced image frames to be corrected even in cases with a complex time dependence of the contrast agent density, such as contrast-enhanced cardiac ultrasound. Correcting differences in contrast agent density means that the image frames may be compared more easily and improves a reliability of interpreting features in the image frames, as it reduces the need for clinicians to distinguish between effects arising from the time dependence of the contrast agent and those caused by physiologically relevant processes.

The sequence of contrast-enhanced image frames may be based on one-dimensional (1D) images, two-dimensional (2D) images or three-dimensional (3D) images.

The reference image frame may be chosen to be an image frame with a high average contrast agent density, making it more suitable for segmentation than image frames with lower average contrast agent densities. Once the correction has been applied, segmentation may be reliably performed on frames that had had too low a contrast agent density for segmentation. Using the segmentation of this reference image frame to identify a region of interest improves a reliability of correctly identifying a suitable region for the region of interest.

The region of interest in the reference image frame may be defined as a region suitable for tracking contrast agent density across the sequence of image frames. The region of interest may comprise one or more anatomical structures containing a large fraction of contrast agent and may be defined such that the region is expected to comprise the same one or more anatomical structures in each image frame in the sequence.

The inventors have recognized that basing the correction on the change in image intensity in the region of interest across the sequence of images, rather than on intensity values of the full image frames, results in a more accurate correction. As the region of interest is chosen to be a region containing contrast agent, the image intensity in the region of interest acts as a proxy for the contrast agent density in the region of interest.

The correction may be applied to all the image frames in the sequence of contrast-enhanced image frames, or to a subset of the sequence of contrast-enhanced image frames. For example, the correction may be applied to a subset of the sequence comprising all image frames in the sequence subsequent to the reference image frame.

Optionally, the sequence of contrast-enhanced image frames is a sequence of ventricular opacification image frames, for instance left ventricular opacification image fames or right ventricular opacification image fames.

The method is particularly suitable for use in correcting left ventricular opacification (LVO) images, for instance LVO ultrasound images, as the density of a contrast agent in the left ventricle varies over time significantly and in a complex manner. This time variability is due to the circulation of the blood, and when imaged by means of one or more ultrasound transducers, such time variability is also due to the destruction of the contrast agent by ultrasound waves.

The reference image frame may be selected by: performing an initial segmentation on a subset of image frames comprising the first M frames in the sequence of contrast-enhanced image frames, wherein M is a predetermined number; determining which image frame of the subset of image frames corresponds to a first end-diastolic frame based on the initial segmentation; and selecting the determined image frame as the reference image frame.

The first end-diastolic frame in a sequence of LVO images generally has maximal or near maximal contrast agent density, so makes a suitable reference image frame.

The region of interest may comprise an estimated location of a blood pool in the reference image frame. The blood pool contains a large fraction of contrast agent in left ventricular opacification, and is typically the first anatomical structure in the left ventricle to react to a change in contrast agent density, so is a suitable location for the region of interest. Additionally, the simple shape of the blood pool allows the image intensity in the blood pool to be identified and tracked more easily than, for example, in thin structures such as the myocardium.

The step of identifying the region of interest may further comprise: identifying an end-systolic frame in the sequence of contrast-enhanced image frames; estimating a location of the blood pool in the identified end-systolic frame; and defining the region of interest as a region comprising the estimated location of the blood pool in the reference image frame and the estimated location in the end-systolic frame.

In this way, the region of interest may be defined in such that the region of interest may be expected to be in the blood pool at all image frames in the sequence. This allows the contrast agent density in the blood pool to be tracked across the sequence.

The reference image frame may be selected by: determining which image frame of the first N frames in the sequence of contrast-enhanced image frames has a largest average intensity, wherein N is a predetermined number; and selecting the determined image frame as the reference image frame.

The contrast agent density decreases overall with time, so it is expected that the earliest image frames in the sequence will include image frames with suitably high contrast agent densities. The image frame with the largest average intensity among these frames will correspond to the image frame with the highest contrast agent density.
N may be a predetermined number, which is preferably less than 10, e.g. preferably less than 5.

The reference image frame may be an image frame in which the contrast agent density is the highest in the sequence of contrast-enhanced image frames. The image frame with the highest contrast agent density is the frame most suitable for performing segmentation on.

The step of correcting one or more image frames in the sequence of image frames may comprise: defining a non-linear transfer function of intensity values such that a mean uncorrected image intensity of the region of interest in the image frame is mapped to a mean image intensity of the region of interest in the reference image frame, for each of the one or more image frames; applying, for each of the one or more image frames, the non-linear transfer function defined for the image frame to at least a part of the image frame.

The non-linear transfer functions are designed to modify the images such that they resemble a hypothetical scenario in which the density of the contrast agent did not change over time, producing a more uniform appearance across the sequence of contrast-enhanced image frames.

The continuous mapping of intensities in the non-linear transfer functions means that the introduction of spurious intensity edges in the correction process is avoided.

The step of correcting one or more image frames in the sequence of image frames may comprise: defining a function based on histogram matching such that gray-value statistics of at least part of the image frame are aligned to gray-value statistics of the region of interest in the reference image frame, for each of the one or more image frames, and applying, for each of the one or more image frames, the function defined for the image frame to at least a part of the image frame.

This method aligns higher quantiles of the gray-value distribution between the image frame being corrected and the reference frame.

The non-linear transfer function may be applied to the whole of the image frame or (only) a part of the image frame, preferably wherein the part includes the region of interest. The time variability of the contrast agent mostly affects the image intensities in anatomical structures that contain the contrast agent; these regions are generally found close to the region of interest. In the context of the present application, a "part" does not include the whole of the image.

The segmentation performed on the reference image frame may be a model-based segmentation. Alternatively, any other suitable segmentation method may be used, e.g. a deep-learning based voxel segmentation method.

There is also proposed a computer program product comprising code means which, when executed on a computing device having a processing system, cause the processing system to perform all of the steps of any herein described method.

There is also proposed a processing system for correcting a difference in contrast agent density in a sequence of contrast-enhanced image frames, the processing system being configured to: select a reference image frame from the sequence of contrast-enhanced image frames; perform segmentation on the reference image frame; identify a region of interest in the reference image frame based on the segmentation; and correct one or more image frames in the sequence of image frames based on a change in image intensity within the region of interest between each of the one or more image frames and the reference image frame.

The reference image frame may be an image frame in which the contrast agent density is the highest in the sequence of contrast-enhanced image frames.

There is also proposed a system comprising: imaging apparatus for obtaining medical images of a subject; and the processing system previously described, further configured to receive the sequence of contrast-enhanced image frames from the imaging apparatus. Said imaging apparatus may be, for instance, an ultrasound imaging apparatus, a magnetic resonance (MR) imaging apparatus, a computer tomography (CT) imagining apparatus, an x-ray imaging apparatus, or any imaging apparatus suitable for contrast enhanced imaging.

These and other aspects of the invention will be apparent from and elucidated with reference to the embodiment(s) described hereinafter.

### BRIEF DESCRIPTION OF THE DRAWINGS

Examples of the invention will now be described in detail with reference to the accompanying drawings, in which:
Fig. 1 illustrates a method for correcting a difference in contrast agent density in a sequence of contrast-enhanced image frames, according to an embodiment of the invention;
Fig. 2 illustrates an example of the different levels of opacification between the first end-diastolic frame and the first end-systolic frame in a sequence of left ventricular opacification image frames;
Fig. 3 illustrates the segmentation of a reference image frame in a sequence of left ventricular opacification images and the identification of a region of interest in the reference image frame, according to an embodiment of the invention;
Fig. 4 illustrates a graph of contrast agent density against time for an example sequence of contrast-enhanced image frames;
Fig. 5 illustrates a graph of average image intensity in an example region of interest against image frame index for a sequence of left ventricular opacification image frames;
Fig. 6 illustrates an example non-linear transfer function used to correct a difference in contrast agent density for a contrast-enhanced image frame, according to an embodiment of the invention;
Fig. 7 illustrates an example result for a correction of a sequence of left ventricular opacification image frames using a non-linear transfer function; and
Fig. 8 illustrates a system for obtaining and correcting a sequence of contrast-enhanced image frames, comprising an imaging apparatus and a processing system, according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

According to a concept of the invention, there is proposed a method and system for correcting a difference in contrast agent density in a sequence of contrast-enhanced image frames. A reference image frame is defined in the sequence of contrast-enhanced image frames, and segmentation is performed on the reference image frame to determine a location of a region of interest within the reference image frame. The region of interest is a region of the reference image frame that contains contrast agent. Other image frames in the sequence of contrast-enhanced images are corrected based on a difference in contrast agent density/image intensity in the region of interest relative to the region of interest in the reference image frame.

Embodiments are at least partly based on the realization that correcting a difference in contrast agent density based on intensity values in a suitable region of the image frames provides a more accurate correction than corrections based on intensity values of the full image frames, and that a suitable region to base the correction on may be identified by first identifying a reference image frame that is suitable for segmentation, and performing segmentation on the reference image frame to identify anatomical structures that contain the contrast agent.

Illustrative embodiments may, for example, by employed in contrast-enhanced medical imaging systems such as contrast-enhanced cardiac ultrasound systems.

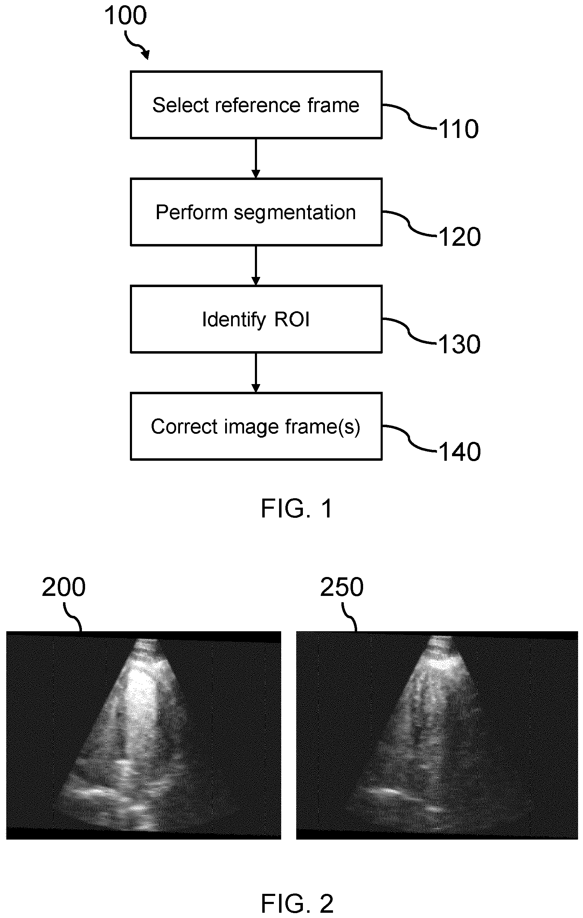

Fig. 1 illustrates a method 100 for correcting a difference in contrast agent density in a sequence of contrast-enhanced image frames. The sequence of contrast-enhanced image frames may be any sequence of contrast-enhanced image frames obtained in a medical imaging acquisition. For example, the sequence may be a sequence of contrast-enhanced ultrasound image frames, such as a sequence of ventricular opacification image frames, for instance left ventricular opacification image fames or right ventricular opacification image fames.

The method begins with step 110, in which a reference image frame is selected from the sequence of contrast-enhanced image frames. The reference image frame is an image frame with a high contrast agent density; for example, the reference image frame may be an image frame in which the contrast agent density is the highest in the sequence of contrast-enhanced image frames.

Various methods for selecting a suitable reference frame in the sequence of contrast-enhanced images are envisaged. In some examples, the reference frame may be determined directly from image data corresponding to the sequence of contrast-enhanced image frames by identifying the image frame in the sequence with the largest average intensity. A large average intensity indicates a high contrast agent density.

The image frame with the highest contrast agent density may be expected to be found early in the sequence of contrast-enhanced image frames, since the contrast agent density generally declines over time. In some examples, therefore, only the first few image frames of the sequence may be used to select a reference image frame. For example, it may be determined which of the first N image frames in the sequence has the largest average intensity, where N is a predetermined number, and this frame may be selected as the reference image frame. N may, for example, be a number less than 10, e.g. a number less than 5. In an example, N = 3.

In other examples, knowledge of how physiological processes affect contrast agent density may be used when selecting a suitable reference image frame. For example, in the case of left/right ventricular opacification, contrast agent density increases during diastole as new blood containing the contrast agent flows into the left/right ventricle, then decreases again as the ultrasound waves used to obtain the contrast-enhanced image frames interact with the contrast agent.

The proposed approach is of particular use for left ventricular opacification, due to the impact of the lungs on the density of the contrast agent, as there is a tendency for a contrast agent (typically introduced using a venous injection) to become diluted when blood flows through/past the lungs. However, it will be appreciated that the advantages of the present invention are achieved when used in both left and right ventricular opacification techniques.

Fig. 2 illustrates an example of the different levels of opacification between the first end-diastolic (ED) frame 200 and the first end-systolic (ES) frame 250 in a sequence of left ventricular opacification image frames. The skilled person will appreciate that a sequence of right ventricular opacification image frames could be processed in a functionally identical manner.

As Fig. 2 shows, the contrast agent density is significantly higher in the first ED frame than in the first ES frame. The first ED frame is expected to have a higher contrast agent density than subsequent ED frames, due to the degradation and dilution of the contrast agent over time. The first ED frame typically has the highest contrast agent density, or a contrast agent density close to the highest contrast agent density, in a sequence of left ventricular opacification image frames.

The first ED frame in a sequence of left ventricular opacification image frames is therefore a suitable choice for a reference image frame. The reference image frame may therefore be selected from a sequence of left ventricular opacification image frames by identifying the first ED frame and selecting this frame as the reference image frame. For example, an initial segmentation, such as a model-based segmentation, may be performed in order to determine which image frame in the sequence corresponds to the first ED frame.

As the first ED frame will be found towards the beginning of the sequence, the initial segmentation may only be performed on the first few image frames. For example, an initial model-based segmentation may be performed on a subset of image frames comprising the first M frames in the sequence of left ventricular opacification image frames, where M is a predetermined number. Which image frame in the subset corresponds to the first ED frame may then be determined based on the initial model based segmentation, and the image frame determined to correspond to the first ED frame may be selected as the reference image frame.

Returning to Fig. 1, at step 120, a segmentation is performed on the selected reference image frame. The segmentation may, for example, be a model-based segmentation, but alternative segmentation methods, such as AI-based segmentation methods (i.e. a machine-learning method, such as a neural network or the like), are also envisaged.

As the reference image frame is chosen to have a high contrast agent density, the reference image frame will generally be well suited for segmentation without the need for image correction.

At step 130, a region of interest (ROI) is identified in the reference image frame based on the segmentation. The ROI is a region, part or fraction of the reference image frame that contains the contrast agent. For example, the ROI may correspond to one or more anatomical structures, identified in the segmentation, that typically contain large fractions of the contrast agent, e.g. based on known parameters, literature. The identity of the ROI may be predetermined, e.g. based on upon the specific use case scenario.

A ROI preferably forms only part of the overall reference image frame, i.e. not all of the overall reference image frame. It will be apparent that the region of interest (when identified within the reference image frame) can be mapped to identical locations/regions in each other image frame of the sequence of contrast-enhanced image frames. Thus, a region of interest identified in the reference image frame corresponds to a region of interest (of a same size and position) in each other image frame of the sequence.

In the case of left ventricular opacification, for example, the ROI may comprise an estimated location of the blood pool in the reference image frame. The estimation of the location of the blood pool is based on the segmentation results. Thus, the ROI may (in this scenario) correspond to a part of the image that represents a blood pool. The location of this part of the image is identifiable using the segmentation results.

As another example, the ROI may be a location of a lesion or tumor. For instance, a tumor or lesion in the brain may cause a leak or break in the blood-brain barrier, meaning that contrast-enhanced agents present in the blood will leak into a region of the brain surrounding the tumor/lesion. This results in the appearance of the tumor/lesion in an image frame being highlighted.

Other suitable examples for regions of interest that contain large fractions of the contrast agent would be apparent to the skilled person, and depend upon the use case scenario (i.e. the implementation details).

In some sequences of contrast-enhanced image frames, the size and location of an anatomical structure may vary across the sequence of image frames. For example, in a sequence of left ventricular opacification images, anatomical structures of the heart vary in size and location over the cardiac cycle. As another example, in a sequence of images of the brain, blood flow or changes in patient position may result in movement in the brain.

In some examples, this variation is taken into account in the determination of the size and location of the ROI. For example, for a sequence of left ventricular opacification image frames, an estimated size and location of the blood pool at end-systole may be used in addition to the estimated location of the blood pool in the reference image frame when defining the ROI. In this way, the ROI can be defined such that it is (at least approximately) within the blood pool at all image frames in the sequence, assuming the image frames in the sequence are approximately aligned.

Various methods are envisaged for identifying a suitable region of interest based on an estimated location of the blood pool in the reference image frame and an estimation end-systolic (ES) size and location of the blood pool. In an example, an ES frame is identified in the sequence of left ventricular opacification images, based, for example, on the initial segmentation used to identify the first ED frame. A location and size of the blood pool may then be estimated in the identified ES frame by using the difference mode between the ED and ES frames of a mean mesh averaged over several datasets. The ROI may be defined as having the estimated location and size of the blood pool in the ES frame. Alternatively, the size and location of the ROI in the reference image may be obtained by scaling the estimated ES blood pool by a factor f, where f < 1 (e.g. f = 0.8), with respect to its center of gravity. Scaling down the estimated ES blood pool to define the ROI increases the likelihood that the ROI of interest will remain entirely within the blood pool in all frames, since there will be some uncertainty in the estimation of the size and location of the blood pool due to uncertainties in both the segmentation of the first ED frame and the mapping to the ES frame using the difference mode. In another example, a suitable morphological operation (e.g. erosion) may be used to define the ROI.

Thus, a region of interest can be defined by identifying a region of the reference frame that contains the contrast agent and for which it is predicted that each other frame of the sequence of frames have a corresponding region of interest (at the same location and size) that contains the contrast agent. The description provided above provides one example of this process.

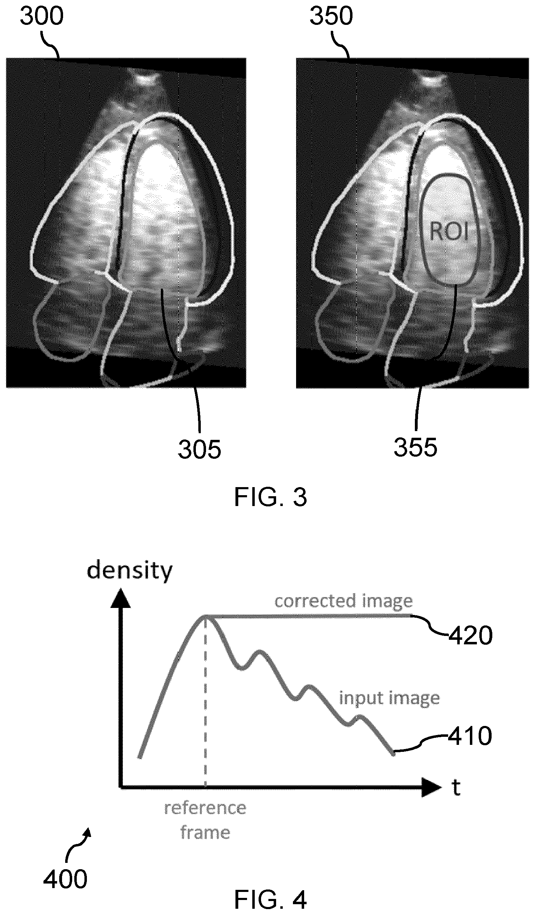

Fig. 3 illustrates the segmentation of a reference image frame in a sequence of left ventricular opacification images and the identification of the ROI, as described above. Image 300 shows the segmentation of the reference image frame, which is used to estimate the location of the blood pool 305. Image 350 shows the identification of the ROI 355. The ROI 355 is smaller than the blood pool 305 in the reference image frame, as it has been defined to be with the blood pool at all frames in the sequence of left ventricular images, as described above.

Returning to Fig. 1, at step 140, a difference in contrast agent density is corrected in one or more image frames in the sequence of contrast-enhanced images. The aim of the correction is to modify the one or more images to resemble or simulate (e.g. as closely as possible) how they would have looked had the contrast agent density been the same as in the reference image frame. This idea is illustrated in Fig. 4.

Fig. 4 shows a schematic graph 400 of contrast agent density against time for an example sequence of contrast-enhanced image frames. The density of uncorrected image frames 410 varies over time. The reference image frame has been chosen to be the frame with the highest contrast agent density. Corrected image frames 420 have the same contrast agent density as the reference image frame.

The correction applied to each image frame is based on a change in image intensity within the ROI between the image frame and the reference image frame. The use of the image intensity of the ROI only, rather than the intensity of the full image, improves the accuracy of the correction.

Thus, a difference between the image intensity in the ROI of the reference image frame and the ROI (at the same position and size) of the image frame to be changed is used to correct the image frame to be changed.

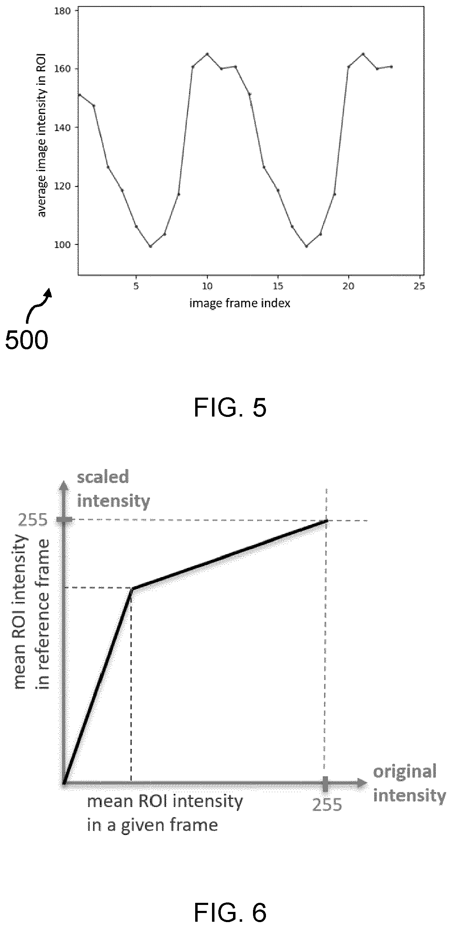

Fig. 5 shows how the average image intensity within the ROI may be used as a proxy for contrast agent density. Fig. 5 illustrates a graph 500 of average image intensity in an example ROI against image frame index for a sequence of left ventricular opacification image frames. As graph 500 shows, the average image intensity in the ROI shows the expected variability in contrast agent density over the cardiac cycle.

In some examples, the difference in contrast agent density is corrected by defining a non-linear transfer function of the intensity values for each of the one or more image frames, designed such that a mean image intensity of the ROI in the uncorrected image frame is mapped to the mean image intensity of the ROI in the reference image frame.

Fig. 6 illustrates an example non-linear transfer function which may be used to correct the difference in contrast agent density for a contrast-enhanced image frame. An intensity equal to the mean ROI intensity in the image frame being corrected is adjusted to a corrected intensity that is equal to the mean ROI intensity in the reference image frame. The continuous mapping of the intensities in this function allows the image frame to be corrected without introducing spurious intensity edges. Also, note that both the minimal and maximal intensity values (here 0 and 255, respectively) are left invariant by the transfer function; this ensures that no overall shift in intensity values is applied to the image.

In other examples, a histogram-matching method may be used to correct the one or more image frames, in which the gray-value statistics of the image frame (or a region thereof, as described hereafter) being corrected are aligned to those of the ROI in the reference frame. In other words, a histogram-matching function may be defined such that gray-value statistics of at least a part of the image frame being corrected are aligned to gray-value statistics of the region of interest in the reference image frame. Compared to the approach based on mean intensity value alone described above, such a method also aligns higher quantiles of the gray-value distribution between the image being corrected and the one of the reference frame. Further methods for correcting a difference in contrast agent density based on a change in image intensity within the ROI between in image frame and the reference image frame will be apparent to the skilled person.

The one or more image frames corrected may comprise all the image frames in the sequence except for the reference image frame. Alternatively, the correction may be applied only to a subset of the sequence of contrast-enhanced images. For example, the one or more image frames corrected may comprise all image frames in the sequence subsequent to the reference image frame, or the one or more image frames corrected may comprise only image frames selected for comparison by a clinician.

The correction of each of the one or more image frames may be applied to the whole image frame, or the application of the correction may be restricted to a part of the image frame. For example, the correction may be applied only to a region/part of the image close to and/or including the ROI, as regions close to the ROI are generally more likely to contain contrast agent than regions further from the ROI and are therefore generally more affected by the time variability of the contrast agent. For example, the correction could be fully applied within the ROI, and smoothly transition to the identity function (i.e. no correction) far outside the ROI, with the transition parameter for each voxel being the closest distance to the ROI.

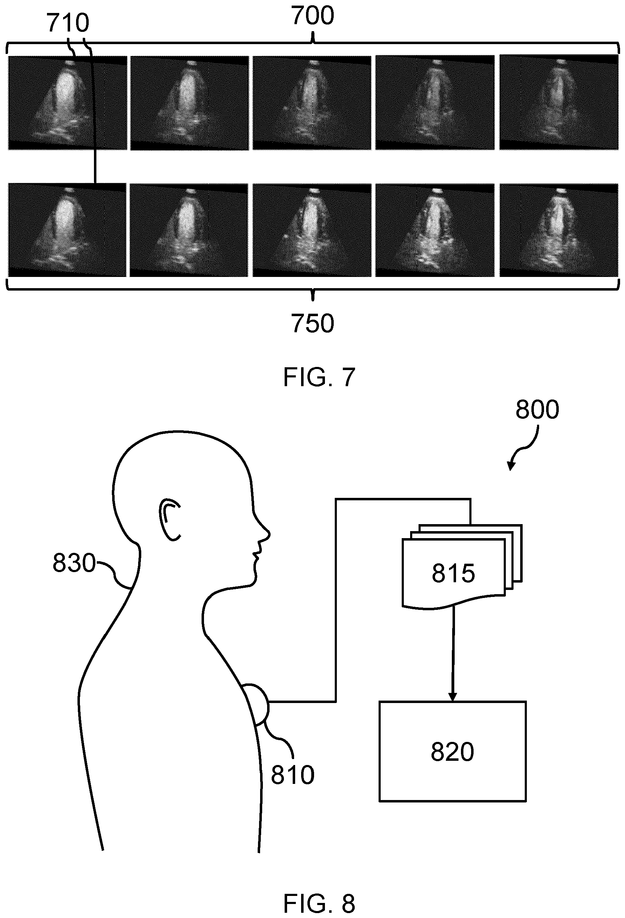

Fig. 7 illustrates an example result 750 for a correction of a sequence of left ventricular opacification image frames 700 using the non-linear transfer function described with reference to Fig. 6. In this example, the correction to each image has been applied the whole of each image.

As shown in Fig. 7, in the uncorrected sequence 700, the reference frame 710 has the highest contrast agent density, and the contrast agent density decreases over time (as the sequence progresses from left to right). In the corrected sequence 750, the contrast agent density is approximately constant across the sequence.

Fig. 8 illustrates a system 800 for obtaining and correcting a sequence of contrast-enhanced image frames, comprising imaging apparatus 810 and a processing system 820, according to an embodiment of the invention. The processing system 820 is, itself, an embodiment of the invention.

The imaging apparatus 810 is a medical imaging apparatus configured to obtain a sequence of contrast-enhanced image frames 815 of a subject 830. In Fig. 8, the imaging apparatus is an ultrasound probe for obtaining left ventricular opacification images, but any imaging apparatus suitable for obtaining contrast-enhanced image frames may be used, e.g. an MRI system, a CT system and so on.

The processing system 820 comprises one or more processors configured to receive the sequence of contrast-enhanced image frames 815 from the imaging apparatus 810, and correct a difference in contrast agent density in the sequence.

The processing system 820 corrects the difference in contrast agent density by selecting a reference image frame from the sequence 815, performing segmentation (for example, a model-based segmentation) on the reference image frame, identifying a region of interest in the reference image frame based on the segmentation, and correcting one or more image frames in the sequence based on a change in image density within the region of interest between each of the one or more image frames and the reference image frame, as described with reference to Fig. 1 above.

In some embodiments, the processing system 820 may select the image frame in the sequence 815 that has the highest contrast agent density as the reference image frame. The processing system may select the reference image frame by determining which image frame of the first few frames in the sequence has the largest average intensity. In the case of a sequence of left ventricular opacification image frames, the processing system may select the reference image frame by identifying the first end-diastolic frame, for example, by performing an initial segmentation on the first few frames in the sequence.

In some embodiments, where the sequence 815 is a sequence of left ventricular opacification images, the processing system 820 may identify the blood pool as the region of interest. The processing system may estimate a location of the blood pool in the reference image frame based on the results of the segmentation. The processing system may further define the region of interest by identifying an end-systolic frame in the sequence 815, estimating a location of the blood pool in the end-systolic frame, and defining the region of interest to comprise the estimated location of the blood pool both in the reference image frame and the end-systolic frame.

In some embodiments, the processing system 820 may correct the one or more images in the sequence 815 by defining a non-linear transfer function of intensity values for each image frame, and applying the non-linear transfer function defined for an image frame to at least part of the image frame. The non-linear transfer function is defined for each image frame such that a mean uncorrected image intensity of the region of interest in the image frame is mapped to a mean image intensity of the region of interest in the reference image frame. In some examples, the processing system may apply the non-linear transfer function to the entire image frame. In other examples, the processing system may apply the non-linear transfer function only to a part of the image that includes the image frame.

Embodiments described in this detailed description have been focused upon a sequence of left ventricular opacification images, for the sake of improved contextual understanding. However, the skilled person will appreciate that the proposed mechanism could be configured for use with any suitable sequence of image frames, for instance, a sequence of right ventricular opacification image frames.

It will be understood that the disclosed methods are computer-implemented methods. As such, there is also proposed a concept of a computer program comprising code means for implementing any described method when said program is run on a processing system.

Any advantages of the computer-implemented method according to the present invention analogously and similarly apply to the system and computer program herein disclosed.

It will be appreciated by those skilled in the art that two or more of the above-mentioned options, implementations, and/or aspects of the invention may be combined in any way deemed useful.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

As discussed above, the processing unit, for instance a controller, implements the control method. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

As discussed above, the system makes use of a processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A computer-implemented method (100) for correcting a difference in contrast agent density in a sequence of contrast-enhanced image frames (700, 815), the computer-implemented method comprising:
selecting a reference image frame (710) from the sequence of contrast-enhanced image frames;
performing segmentation on the reference image frame;
identifying a region of interest (355) in the reference image frame based on the segmentation, wherein the region of interest is a region of the reference image frame that contains the contrast agent; and
correcting the difference in contrast agent density in one or more image frames in the sequence of image frames based on a change in image intensity within the region of interest between each of the one or more contrast-enhanced image frames and the reference image frame.

2. The computer-implemented method (100) of claim 1, wherein the sequence of contrast-enhanced image frames (700, 815) is a sequence of ventricular opacification image frames.

3. The computer-implemented method (100) of claim 2, wherein the reference image frame (710) is selected by:
performing an initial segmentation on a subset of image frames comprising the first M frames in the sequence of contrast-enhanced image frames, wherein M is a predetermined number;
determining which image frame of the subset of image frames corresponds to a first end-diastolic frame based on the initial segmentation; and
selecting the determined image frame as the reference image frame.

4. The computer-implemented method (100) of claim 2 or 3, wherein the region of interest (355) comprises an estimated location of a blood pool (305) in the reference image frame (710).

5. The computer-implemented method (100) of claim 4, wherein the step of identifying the region of interest (355) further comprises:
identifying an end-systolic frame in the sequence of contrast-enhanced image frames (700, 815);
estimating a location of the blood pool in the identified end-systolic frame; and
defining the region of interest as a region comprising the estimated location of the blood pool in the reference image frame and the estimated location in the end-systolic frame.

6. The computer-implemented method (100) of claim 1 or 2, wherein the reference image frame (710) is selected by:
determining which image frame of the first N frames in the sequence of contrast-enhanced image frames has a largest average intensity, wherein N is a predetermined number; and
selecting the determined image frame as the reference image frame.

7. The computer-implemented method (100) of any of claims 1 to 6, wherein the reference image frame (710) is an image frame in which the contrast agent density is the highest in the sequence of contrast-enhanced image frames (700, 815).

8. The computer-implemented method (100) of any of claims 1 to 7, wherein the step of correcting one or more image frames in the sequence of image frames (700, 815) comprises:
defining, for each of the one or more image frames, a non-linear transfer function of intensity values such that a mean uncorrected image intensity of the region of interest in the image frame is mapped to a mean image intensity of the region of interest in the reference image frame;
applying, for each of the one or more image frames, the non-linear transfer function defined for the image frame to at least a part of the image frame.

9. The computer-implemented method (100) of any of claims 1 to 7, wherein the step of correcting one or more image frames in the sequence of image frames (700, 815) comprises:
defining, for each of the one or more image frames, a function based on histogram matching such that gray-value statistics of at least a part of the image frame are aligned to gray-value statistics of the region of interest in the reference image frame; and
applying, for each of the one or more image frames, the function defined for the image frame to at least a part of the image frame.

10. The computer-implemented method (100) of any of claims 1 to 9, wherein the difference in contrast agent density is corrected in the whole of each of the one or more image frames.

11. The computer-implemented method (100) of any of claims 1 to 9, wherein the difference in contrast agent density is corrected in a part of each of the one or more image frames, wherein the part includes the region of interest (355).

12. A computer program product comprising code means which, when executed on a computing device having a processing system, cause the processing system to perform all of the steps of the method according to any of claims 1 to 11.

13. A processing system (820) for correcting a difference in contrast agent density in a sequence of contrast-enhanced image frames (700, 815), the processing system being configured to:
select a reference image frame (710) from the sequence of contrast-enhanced image frames;
perform segmentation on the reference image frame;
identify a region of interest (355) in the reference image frame based on the segmentation; and
correct one or more image frames in the sequence of image frames based on a change in image intensity within the region of interest between each of the one or more image frames and the reference image frame.

14. The processing system (820) of claim 13, wherein the reference image frame (710) is an image frame in which the contrast agent density is the highest in the sequence of contrast-enhanced image frames (700, 815).

15. A system (800) comprising:
imaging apparatus (810) for obtaining medical images of a subject (830); and
the processing system (820) of claim 13 or 14, further configured to receive the sequence of contrast-enhanced image frames (700, 815) from the imaging apparatus.
